# DEMANDE DE BREVET EUROPEEN

(11) **EP 4 787 275 A1**
(43) Date de publication de la demande: **05.08.2026**
(21) Numéro de dépôt: 26155887.8
(22) Date de dépôt: 03.02.2026
(51) Int. Cl.: G06Q 30/0601

(54) **PROCÉDÉ MIS EN UVRE PAR UN SYSTÈME INFORMATIQUE POUR GÉNÉRER UN DIALOGUE**

(30) Priorité: 04.02.2025 CH 97202025
(71) Demandeur: IP Keys Sàrl, 1950 Sion (CH)
(72) Inventeur: BALET, Eric, 1967 Bramois (CH)
(74) Mandataire: P&TS SA (AG, Ltd.)

(57) **Abrégé**

Procédé mis en œuvre par un système informatique pour générer un dialogue comprenant une recommandation d'un assortiment de produit adaptée à un utilisateur,
le système d'apprentissage automatique multimodal étant basé sur un large modèle de langage multimodal (MLLM),
le procédé comprenant les étapes de :
i-recevoir les données suivantes dans une plateforme logicielle de dialogue interactive :
a) des images de l'utilisateur,
b) des extraits de sa voix, et
c) des réponses de l'utilisateur à des questions,

ii-effectuer un pré-traitement desdites données en entrée ;
iii-générer à l'aide d'un ou plusieurs processeurs des vecteurs transmis audit système d'apprentissage automatique multimodal ;
v-fournir des vecteurs correspondant à des répliques vocales et/ou textuelles ;

dans lequel lesdites répliques contiennent un assortiment de produits recommandés dépendant desdites entrées et de l'entraînement du système d'apprentissage automatique multimodal,
et dans lequel le large modèle de langage multimodal est entraîné à l'aide d'un algorithme de renforcement, de manière à optimiser le taux de conversion d'utilisateurs à qui les produits sont proposés.

## Description

### Domaine technique

La présente invention concerne un procédé mis en œuvre par un système informatique pour améliorer l'interface homme-machine multimodale lors de la recommandation d'un assortiment de produits.

### Etat de la technique

Des systèmes de recommandation de produits sont connus dans l'état de la technique et mis en œuvre notamment sur des sites de vente en ligne ou de streaming afin de proposer aux utilisateurs des produits susceptibles de les intéresser. Ces systèmes utilisent typiquement un historique des achats et des consultations de l'utilisateur afin de lui recommander des produits également achetés par d'autres utilisateurs avec un historique d'achat ou de consultation similaire.

L'interface utilisateur de ces systèmes de recommandation est problématique. Un problème de ce type de système de recommandation est qu'il est impossible de déterminer des recommandations pour des utilisateurs ou des produits pour lesquels le système ne dispose pas encore de suffisamment d'informations, par exemple lorsqu'il n'y a pas d'historique d'achat. Ce problème est parfois appelé problème du « cold start ». L'interaction homme-machine est insatisfaisante car un utilisateur doit utiliser abondamment le système avant de recevoir des recommandations pertinentes.

On sait par ailleurs que la personnalité des consommateurs détermine leur choix de produits, tout comme d'autres facteurs tels que les besoins objectifs, le prix, la publicité etc. Le terme "personnalité" désigne des caractéristiques psychologiques, émotionnelles, comportementales et cognitives qui définissent durablement un individu et le distinguent des autres. Elle englobe des traits de caractère, des valeurs, des attitudes et des modes de réaction face aux événements de la vie. En psychologie, plusieurs théories et modèles cherchent à comprendre et à classer les traits de personnalité, comme le modèle des Big Five (les cinq grands traits de personnalité).

On connait déjà des procédés de recommandation de produits qui tiennent compte de la personnalité de l'utilisateur. Ainsi, US2016005056A1 décrit un procédé de recommandation de produit par corrélation de l'élasticité de la personnalité de produits avec cinq grands traits de personnalité de l'utilisateur. Le procédé de US2016005056A1 comporte une première étape qui permet de classer les utilisateurs selon les cinq grands traits de personnalité prédéterminés selon le modèle des Big Five, et une deuxième étape distincte qui permet de trouver des affinités entre ces traits de personnalité prédéfinis et des produits.

Aucune étude ne permet de déterminer si ces cinq traits de personnalité prédéterminés selon le modèle des Big Five sont les plus relevants pour la recommandation de tous types de produits. D'autres traits de personnalité et d'autres caractéristiques des utilisateurs potentiellement autant pertinentes, ou même davantage pertinentes, ne sont pas pris en considération.

Dans cet art antérieur, la personnalité des utilisateurs est déterminée à partir de différentes sources exogènes, par exemples des sources démographiques indiquant l'âge, le genre, l'ethnicité de chaque utilisateur. Le procédé n'est donc pas adapté à la recommandation de produits à des utilisateurs anonymes pour lesquels ces informations ne sont pas disponibles. Enfin, ce procédé ne permet pas de générer de dialogue.

US2015278590A1 décrit un système pour déterminer la personnalité d'un utilisateur en se basant sur ses caractéristiques anatomiques. Dans un mode de réalisation, le procédé met en œuvre une extraction de caractéristiques anatomiques prédéterminées à partir d'images statiques ou animées d'un utilisateur, et l'utilisation d'au moins un modèle de Markov caché HMM (Hidden Markov Model) afin de classer l'utilisateur selon différents traits de personnalité. Le procédé permet aussi de recommander à l'utilisateur des produits en fonction de cette personnalité.

A nouveau, les utilisateurs sont classés selon des traits de personnalité prédéfinis, bien qu'il n'ait pas été démontré si ces traits de personnalité sont réellement pertinents pour la recommandation de produits.

US2014337101A1 décrit un autre procédé de détermination de la personnalité d'un utilisateur afin d'améliorer le service aux utilisateurs. A nouveau les utilisateurs sont classés selon des traits de personnalité prédéterminés.

Ces systèmes de recommandation de produits s'avèrent utiles mais ils restent généralement moins efficaces qu'un vendeur humain qui est capable de tenir compte d'une multitude de paramètres pour recommander un produit à un utilisateur particulier. Par exemple, un utilisateur humain ne va généralement pas classer explicitement et mécaniquement chaque acheteur potentiel selon des classes de personnalités déterminées de manière rigide à l'avance ; mais il tient néanmoins compte de l'apparence physique et de la voix de l'utilisateur pour adapter son dialogue, y compris le ton de sa voix, les répliques, et les recommandations de produit adaptées. Un vendeur de voiture expérimenté saura ainsi observer l'apparence d'un acheteur pour déterminer sa personnalité et évaluer son pouvoir d'achat afin de lui recommander une voiture plus ou moins luxueuse, plus ou moins sportive, ou plus ou moins familiale par exemple, et d'adapter son discours et sa voix à son interlocuteur.

### Bref résumé de l'invention

Un but de la présente invention est de proposer une amélioration de l'interface homme-machine, notamment afin de permettre à un utilisateur de sélectionner un produit plus rapidement..

Selon l'invention, ces buts sont atteints notamment au moyen d'un procédé mis en œuvre par un système informatique pour générer un dialogue comprenant une recommandation d'un assortiment de produit adaptée à un utilisateur, le système d'apprentissage automatique multimodal étant basé sur un large modèle de langage multimodal (MLLM), le procédé comprenant les étapes de :
i-disposer de vecteurs correspondant à un assortiment de produits ;
ii-recevoir en entrée les données suivantes dans une plateforme logicielle de dialogue interactive :
   a) des images de l'utilisateur,
   b) des extraits de sa voix, et
   c) des réponses de l'utilisateur à des questions,
iii-effectuer un pré-traitement desdites données en entrée ;
iv-générer à l'aide d'un ou plusieurs processeurs des vecteurs correspondant auxdites données en entrée prétraitées;
v-transmettre lesdits vecteurs audit système d'apprentissage automatique multimodal ;
vi-fournir en sortie du système d'apprentissage automatique multimodal des vecteurs correspondant à des répliques vocales, textuelles et/ou multimodales ;
vii-convertir lesdits vecteurs en sortie en répliques textuelles, vocales et/ou multimodales ;
dans lequel lesdites répliques contiennent un assortiment de produits recommandés dépendant desdites entrées et de l'entraînement du système d'apprentissage automatique multimodal.

L'utilisation de données visuelles et vocales, couplées à des réponses de l'utilisateur à des questions, améliore la robustesse de la recommandation de produit, en permettant au système de déterminer plus rapidement et de manière plus fiable les produits à recommander.

Ces entrées multimodales, et l'alignement de des différentes modalités, permettent de réduire le taux de reconnaissance et le risque d'hallucinations du MLLM.

L'assortiment de produits peut inclure des produits physiques vendus ou échangés suite à une transaction : Dans un mode de réalisation, l'assortiment de produits peut comprendre des services vendus ou échangés suite à une transaction sur une plateforme de e-commerce, y compris par exemples de titres de transport, des voyages, des billets de spectacle, des services de conciergerie, etc...

Le large modèle de langage multimodal peut être entraîné à l'aide d'un algorithme de renforcement.

Les objectifs de l'algorithme de renforcement peuvent dépendre de données fournies par la plateforme de vente. Ces objectifs peuvent de préférence être choisis par le vendeur. Par exemple, un vendeur peut choisir un taux de conversion d'utilisateurs à qui les produits sont proposés qui soit important pour lui. Ainsi, le MLLM est de préférence entraîné avec un système de récompense qui récupère le taux de conversion mesuré et de manière à augmenter le taux de conversion de chaque vendeur.

Le dialogue est de nature multimodale, l'utilisateur et le système s'expriment naturellement entre eux. L'utilisateur s'exprime en utilisant son smartphone, une montre connectée, ou tout autre appareil électronique muni de moyens d'interaction, par exemple d'un écran de visualisation, d'une caméra, d'un microphone et/ou d'un accès Internet, afin de générer lesdites données en entrée. L'utilisateur utilise la vidéo et/ou communique son apparence par une image fixe, par exemple un selfie.

Le système communique également par une interaction visuelle avec éventuellement un avatar. L'apparence, le comportement, la nature de la voix de l'avatar ainsi que les autres caractéristiques de présentation sont adaptées à la personnalité du visiteur du site.

Le procédé comporte de préférence une étape de classement de l'utilisateur selon son profil de personnalité, déterminé en fonction de images de l'utilisateur, des extraits de sa voix, et des réponses de l'utilisateur aux questions. La génération de dialogue généré dépend ainsi d'un profil de personnalité déterminé explicitement. Par exemple, un site de vente de vêtement ne proposera pas le même assortiment à une personne introvertie qu'à une personne extravertie.

La personnalité de l'utilisateur peut être modélisée par un vecteur d'état représentant l'utilisateur.

Des systèmes d'apprentissage automatique multimodal basés sur des larges modèles de langages multimodaux (MLLM) sont connus dans l'état de la technique et décrits notamment dans https://en.wikipedia.org/wiki/Large_language_model, consultée le 11 décembre 2024.

Un système est dit multimodal s'il a plusieurs modalités, une modalité étant un type d'entrée ou de sortie, par exemple texte, image, vidéo, audio, etc. La présente invention se réfère de préférence à un système ayant plusieurs modalités en entrée et plusieurs modalités en sortie.

Une manière connue de créer un large modèle multimodal (MLLM) à partir d'un LLM est de tokenizer la sortie d'un encodeur entraîné pour transformer au moins une modalité autre que le langage (par exemple la voix, les images etc) en vecteurs ayant les mêmes dimensions et la même structure que les tokens de langage que le LLM reçoit à l'entrée, et d'injecter ces tokens en entrée du système d'apprentissage multimodal, en parallèle aux tokens de langage.

Une autre manière de créer un large modèle multimodal à partir d'un LLM est de tokenizer au moins une modalité autre que le langage (par exemple la voix, les images etc) et d'injecter ces tokens au niveau du mécanisme de modélisation de l'attention de système d'apprentissage multimodal.

Les différentes modalités sont synchronisées à l'entrée du MLLM. Dans ce contexte, "synchroniser des modalités" veut dire aligner temporellement plusieurs types de signaux (modalités), par exemple texte, image, voix.

Dans ce but, les données en entrées correspondant à chaque modalité sont transformées en une suite de vecteurs compatibles avec le MLLM. Les différentes suites de vecteurs correspondant à chaque modalité peuvent être découpées en fenêtres temporelles, par exemple des fenêtres de 0,5 à dix secondes, appariées entre elles. Par exemple, l'image de l'utilisateur entre les secondes 20 et 25 peut être appariée avec ses paroles pendant le même intervalle. L'appariement peut être effectué par exemple en labelisant les différentes fenêtres temporelles, afin que le MLLM puisse associer les paroles et la voix de l'utilisateur pendant une fenêtre à son image.

Les fenêtres temporelles peuvent avoir des durées différentes. Par exemples, les fenêtres temporelles associées à l'image et à la voix de l'utilisateur peuvent avoir une durée assez brève afin de capter des variations au long du dialogue, alors que les réponses de l'utilisateur à des questions peuvent être prédéfinies et utiliser pour l'ensemble du dialogue.

Dans la présente invention, ces systèmes d'apprentissage automatique utilisent de préférence une modélisation de l'attention. Celle-ci est dite croisée (cross-attention) si la nature des données est différente ou multimodale, sinon, elle est définie comme "self-attention". Cette modélisation de l'attention est de préférence utilisée dans une architecture à base de Transformer.

Le système d'apprentissage automatique multimodal permet de classer la personnalité de l'utilisateur non seulement en fonction de la voix, mais en fonction de différentes entrées multimodales.

Un exemple d'un tel système d'apprentissage automatique multimodal connu à la date de dépôt est GPT-4o qui peut recevoir en entrée aussi bien des textes que des images. Cependant, GPT-4o n'a pas été entraîné spécifiquement pour générer des dialogues avec des recommandations d'assortiment de produit dépendant notamment d'images de l'utilisateur. GPT-4o n'a pas non plus été entraîné pour modéliser la personnalité des utilisateurs avec lesquels il dialogue en fonction de leur voix ou de leur apparence par exemple. Un système d'apprentissage automatique multimodal connu est donc inadapté sans modification ou entraînement.

Selon le procédé, les recommandations d'assortiment de produit ne dépendent pas de classes de personnalité prédéterminées; le système d'apprentissage multimodal est entraîné pour déterminer lui-même des classes de personnalité.

Le système d'apprentissage automatique classe de préférence l'utilisateur selon des classes de personnalité non prédéterminées, par exemple des classes déterminées par le système lui-même, et génère ladite réplique de dialogue selon lesdites classes.

Les répliques peuvent être générées par le système d'apprentissage automatique de manière à affiner cette classification de la personnalité de l'utilisateur. Le système d'apprentissage automatique est de préférence entraîné de manière à ce que les répliques générées par ce système permettent de mieux classer la personnalité de l'utilisateur.

Le système d'apprentissage automatique multimodal reçoit des informations multimodales qui lui permettent de déterminer la personnalité de l'utilisateur en fonction par exemple de ses caractéristiques anatomiques, de sa voix, et d'autres informations. Il est entraîné avec des données permettant une modélisation multimodale de la personnalité. Toutefois, la classification des utilisateurs selon leur personnalité se fait selon des classes déterminées par le système d'apprentissage automatique multimodal, sans a priori quant aux classes de personnalité relevantes.

Les classes de personnalité peuvent être représentées par un vecteur d'état. Le classement des utilisateurs, effectué sur la base de l'ensemble des entrées multimodales, revient donc à attribuer à chaque utilisateur au moins une classe de personnalité, et à adapter la recommandation à cette classe.

Le système d'apprentissage automatique est de préférence entraîné de manière à effectuer ce classement de personnalité. Initialement, le système peut être entraîné par une labélisation manuelle des utilisateurs, par exemple en les classant manuellement dans des classes de personnalité prédéfinies par exemple selon les grands traits de personnalité (les « big five »). Le système d'apprentissage automatique apprend alors à associer ces entrées multimodales avec ces classes prédéfinies. Il est cependant agencé de manière à pouvoir ensuite classer les utilisateurs dans d'autres classes de personnalité qu'il peut déterminer lui-même.

Le classement des utilisateurs selon leur personnalité est de préférence effectué tout au long du dialogue, et s'affine au fur et à mesure du dialogue. La recommandation de produit au début et à la fin du dialogue n'est alors pas la même si l'utilisateur est reclassé.

Le classement des utilisateurs selon leur personnalité est avantageusement sauvegardé à la fin du dialogue, afin de pouvoir être réutilisé dès le début d'un dialogue ultérieur.

Le système d'apprentissage automatique est de préférence entraîné de manière à ce que l'assortiment de produits recommandés généré par ce système dépend des informations reçues en entrée, notamment des informations a) à c) ci-dessus.

Le système d'apprentissage automatique établit un modèle de correspondance entre la personnalité d'un utilisateur et un assortiment de produit.

Ce modèle de correspondance peut être enrichi au fil des sessions d'interactions des différents utilisateurs. Par exemple, le système peut découvrir que les personnalités avec un profil de personnalité x commandent volontiers les articles dans un certain assortiment, et recommander cet assortiment à d'autres utilisateurs partageant le même vecteur de personnalité.

Le système d'apprentissage automatique est de préférence entraîné de manière à ce que le contenu sémantique des répliques générées par ce système dépend des informations reçues en entrée, notamment des informations a) à c).

Dans un mode de réalisation, le système d'apprentissage automatique fournit directement en sortie ladite réplique de dialogue sous forme de voix synthétique.

L'intonation employée par le système peut aussi dépendre de l'ensemble des données a) à c) en entrée du système d'apprentissage automatique multimodal. Le système détermine ainsi l'intonation employée dans les répliques.

Le système d'apprentissage automatique détermine de lui-même les caractéristiques pertinentes pour générer ses répliques, celles-ci peuvent par exemple être l'intonation de la voix.

Le système d'apprentissage automatique est de préférence entraîné de manière à ce que l'assortiment de produits recommandé dépende de la voix de l'utilisateur, et non seulement du contenu sémantique des paroles de l'utilisateur.

En d'autres termes, le système d'apprentissage automatique peut tenir compte de caractéristiques de la voix de l'utilisateur, pendant et de préférence même hors du dialogue avec le système d'apprentissage automatique, pour adapter son dialogue et ses recommandations de produit. Le système d'apprentissage automatique peut par exemple tenir compte d'une ou plusieurs des caractéristiques suivantes de la voix de l'utilisateur pour générer ses répliques : ton de la voix, rythme de la parole, volume, intonation, timbre, fluidité de la parole, durée et/ou nombre de pauses et silences, et/ou respiration.

Le système d'apprentissage automatique est de préférence entraîné de manière à ce que l'assortiment de produits recommandé dépende d'images statiques ou animées de l'utilisateur, indépendamment des paroles de l'utilisateur.

En d'autres termes, le système d'apprentissage automatique tient compte de caractéristiques des images fixes ou animées de l'utilisateur, pendant et préférence même hors du dialogue avec le système d'apprentissage automatique, pour adapter son dialogue et ses recommandations de produit. Le système d'apprentissage automatique peut par exemple tenir compte d'une ou plusieurs des caractéristiques suivantes des images fixes ou animées de l'utilisateur pour générer ses répliques ; expressions faciales (par exemple sourire, froncé de sourcil, grimace, et/ou regard), traits physiques, rides et expression de l'âge, posture, langage corporel, fixité du regard, clignement des yeux, gestes, vêtements, accessoires, cheveux, contexte visuel, et/ou environnement.

Le système d'apprentissage automatique multimodal permet non seulement de recommander un assortiment de produits qui dépend d'images de l'utilisateur ; il permet aussi de générer un dialogue adapté à l'utilisateur, en particulier un dialogue qui dépend des images de l'utilisateur.

L'assortiment de produits recommandés, et la manière de les recommander, dépendent donc non seulement de ce que dit l'utilisateur lors de son dialogue avec le système d'apprentissage automatique multimodal, mais aussi de la manière dont celui-ci s'exprime, et d'information visuelles indépendantes du message verbal.

Le système d'apprentissage automatique peut par exemple fournir en sortie au moins une réplique qui dépend de la voix et/ou des images de l'utilisateur capturés avant ou après le dialogue avec le système d'apprentissage automatique. Le système d'apprentissage automatique observe ainsi l'utilisateur, avant ou après le dialogue, pour décider quels produits lui recommander, et comment les recommander.

Lesdites questions auquel répond l'utilisateur peuvent être générées par le système d'apprentissage automatique, de manière à mieux comprendre la personnalité de l'utilisateur et donc l'assortiment correspondant de produits.

Le système d'apprentissage automatique reçoit de préférence en entrée également des vecteurs correspondant à des informations relatives à l'environnement de l'utilisateur, par exemple des images de son environnement ou des réponses à des questions relatives à son environnement. Il les emploie pour déterminer sa personnalité, selon des classes non prédéterminées, et/ou pour déterminer son pouvoir d'achat supposé, et pour recommander des produits correspondant à cette personnalité et/ou à ce pouvoir d'achat.

Le système d'apprentissage automatique reçoit de préférence en entrée également des vecteurs représentant des informations relatives à l'actualité, à la météo, à la date, à la popularité de produits dans l'assortiment, et/ou à des campagnes publicitaires actuelles. Il les emploie pour recommander des produits tenant compte de ces conditions externes, ou pour générer un dialogue tenant compte de ces éléments externes.

Le système d'apprentissage automatique reçoit de préférence en entrée également un profil de l'utilisateur, par exemple un vecteur avec des indications relatives à l'âge, au genre, à l'ethnie, et/ou à la situation familiale de l'utilisateur. Il les emploie pour recommander des produits tenant compte de ces conditions externes, ou pour générer un dialogue tenant compte de ces paramètres, et pour adapter le ton de ses répliques à ces paramètres.

Le système d'apprentissage automatique reçoit de préférence en entrée également des informations relatives à l'historique de l'utilisateur, par exemple son historique d'achat, ou son historique de consultation d'un site web, ou sa personnalité déterminée sur la base d'interactions passées.

Le système d'apprentissage automatique reçoit de préférence en entrée également des vecteurs représentant des informations relatives à la catégorie de produits recherchés par l'utilisateur. Ces informations peuvent être extraites d'un dialogue avec l'utilisateur, être entrées sur un formulaire, ou découler de l'historique de l'utilisateur sur Internet par exemple.

Le système d'apprentissage automatique peut être entraîné pour détecter des incohérences perceptives pré-attentives dans une interaction multimodale, et adapter le dialogue en fonction de ces incohérences.

Les incohérences visuelles perceptives (en anglais vMMN, « Visual Mismatch Negativity » ) sont des marqueurs neurophysiologiques détectables dans un flux d'images ou de voix d'un utilisateur et qui signalent un comportement inattendu de l'utilisateur, révélateur d'un inconfort. Ces incohérences sont signalées de manière inconsciente, sans refléter une émotion ni une préférence déclarée. Ils peuvent être représentés par des micro-variations faciales ou oculaires, des latences de réponse, des micro-ruptures attentionnelles, et/ou des variations prosodiques de la voix, etc.

Le système détecte par exemple une divergence entre une prédiction interne de réponse perceptive de l'utilisateur et une réponse observée, cette divergence déclenchant une adaptation automatique du dialogue.

En détectant ces anomalies dans un dialogue, on peut créer une boucle de rétroaction perceptive et ainsi grandement améliorer la qualité de l'interface homme-machine. Par exemple, le système d'apprentissage peut détecter ces incohérences perceptives en réponse à des suggestions de produit, et ajuster dynamiquement la génération du dialogue. L'ajustement du dialogue effectué en réponse à de telles détections peut impliquer le rythme du dialogue, la modalité dominante (voix, visuel ou texte), la complexité du discours, la voix synthétique utilisée, l'attribution de l'utilisateur à une classe de personnalité et/ou la recommandation d'assortiment.

En d'autres termes, le système d'apprentissage automatique génère via le dialogue un stimulus multimodal (par exemple une affirmation, une image, etc) ; observe les données reçues de l'utilisateur en réponse à ces stimulis (visage, voix) ; détecte à l'aide d'une intelligence artificielle (par exemple le MLLM, ou un module additionnel) des incohérences perceptives ; et ajuste le dialogue en fonction de cette détection.

En exploitant cette détection d'incohérence, on réalise ainsi un système de contrôle adaptatif pour une interface homme-machine adaptée à un système de recommandation de produit.

L'assortiment de produit recommandé peut dépendre du prix maximal acceptable pour l'utilisateur et/ou du pouvoir d'achat de l'utilisateur, déterminé par le système d'apprentissage automatique selon lesdites entrées.

Le procédé peut comprendre la génération d'un avatar animé présentant ladite réplique, les mimiques et la gestuelle dudit avatar dépendant desdites entrées.

Le système d'apprentissage automatique multimodal est de préférence un système auto-apprenant qui s'améliore lors des dialogues successifs de plusieurs utilisateurs, de manière à optimiser le taux de conversion d'utilisateurs. Le procédé selon l'invention va ainsi au-delà de la modélisation d'une personnalité, il cherche à optimiser le problème technique de la génération d'un dialogue en fonction du taux de conversion d'utilisateurs.

Le taux de conversion peut correspondre par exemple au pourcentage d'utilisateurs qui achètent un produit de l'assortiment revendiqué. Il peut dépendre du chiffre d'affaire réalisé suite au dialogue. Il peut dépendre de la marge réalisée sur le ou les produits vendus suite au dialogue. Il peut dépendre du pourcentage d'utilisateurs qui s'abonnent au système.

Dans un mode de réalisation, le système d'apprentissage automatique multimodal utilise des données endogènes au système, c'est-à-dire des données obtenues au cours de l'échange avec l'utilisateur. Dans ce cas, l'approche connue de l'intelligence générative est utilisée pour générer la prochaine réplique du dialogue en fonction des échanges précédents.

Une chaine de pensée (« Chain of Thought ») peut être mise en œuvre pour analyser le problème posé (« quelle est la personnalité de l'utilisateur », ou « à quel assortiment de produit correspond cette personnalité ») et le décomposer en sous-problèmes ou étapes intermédiaires.

Dans un mode de réalisation, le système d'apprentissage automatique multimodal utilise à la fois des données endogènes au système, et des données exogènes, c'est-à-dire des données qui ne sont pas extraites du dialogue avec l'utilisateur, par exemple des données provenant d'une base de données externes, telles que des données météo, des données liées à l'actualité, au vendeur, etc. Dans un tel cas, une architecture Multi-Agent (LLM-based Agents) peut être mise en œuvre pour intégrer ces connaissances spécifiques. Une architecture multi-agents est une architecture qui implique plusieurs agents qui interagissent et coopèrent entre eux pour résoudre un problème. Chaque agent a son propre ensemble de connaissance et ses propres objectifs.

### Brève description des figures

Des exemples de mise en œuvre de l'invention sont indiqués dans la description illustrée par les figures annexées dans lesquelles :
- La figure 1 illustre de manière schématique un exemple d'environnement dans lequel l'invention peut être mise en œuvre ;
- La figure 2 illustre de manière schématique un système informatique selon l'invention ;
- La figure 3 illustre de manière schématique un système d'apprentissage automatique multimodal selon un premier mode de réalisation ;
- La figure 4 illustre de manière schématique système d'apprentissage automatique multimodal selon un deuxième mode de réalisation;

### Exemple(s) de mode de réalisation de l'invention

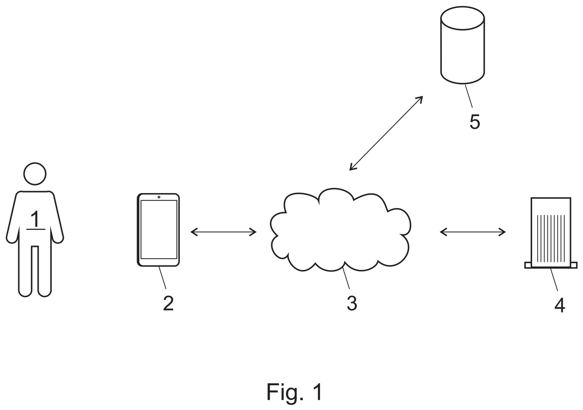

Un exemple de système selon l'invention est décrit schématiquement sur la figure 1. Le système inclut un utilisateur 1 muni d'un équipement, par exemple un équipement mobile 2 tel qu'un smartphone, une tablette, un laptop, une montre connectée, ou tout type d'équipement muni d'une caméra, d'un microphone et capable de se connecter à Internet 3. L'utilisateur emploie une application dans son équipement mobile, un programme d'ordinateur, ou une page dans un navigateur pour mettre en œuvre le procédé de l'invention.

Dans le mode de réalisation illustré, un serveur 4 mettant en œuvre un système informatique 40 est accessible par plusieurs utilisateurs 1 via Internet 3. Le serveur peut être mis en œuvre par un ensemble de serveurs, par exemple dans le cloud. Le serveur exécute un programme d'apprentissage automatique multimodal selon l'invention.

Dans un autre mode de réalisation non illustré, le programme d'apprentissage automatique multimodal est exécuté localement dans l'équipement d'utilisateur 2.

Le système comprend aussi de préférence une ou plusieurs bases de données 5 connectées à Internet, et accessibles par exemple via un site web.

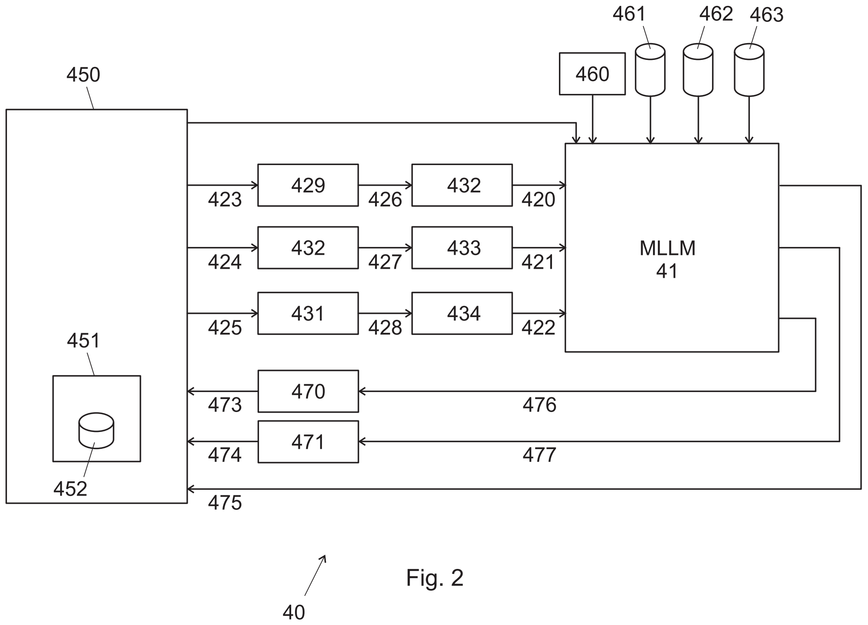

Un exemple de système informatique 40 est illustré sur la figure 2. Le système informatique 40 peut être mis en œuvre par un ensemble de logiciels exécutés par le serveur 4. Il comprend une plateforme 450 de vente ou de recommandation de produits, par exemple un site web de vente ou de recommandation de produits. La plateforme 450 permet de recevoir des messages du client, par exemple des prompts, des sélections d'options, ou des flux audio et vidéo, et de restituer à l'utilisateur 1 des répliques sous forme de pages web dynamiques, de flux audio ou de flux vidéo, de manière à générer un dialogue multimodal.

La plateforme 450 accède de préférence à des données stockées dans une base de données 452, par exemple une base de données d'un ERP et/ou d'un CRM 451. La plateforme 450 permet de préférence également de commander lesdits produits.

Le système informatique 40 permet de mettre en œuvre un agent conversationnel multimodal utilisant un système d'apprentissage automatique multimodal. Le système d'apprentissage automatique multimodal met en œuvre un modèle de langage multimodaux 41 (MLLM) pour offrir une interaction fluide et dynamique avec l'utilisateur 1, capable de traiter et d'intégrer différentes modalités d'entrée telles que le texte, la parole, les images, et éventuellement d'autres types de données comme les vidéos ou les gestes.

Selon l'exemple de la figure 2, les composants principaux du système informatique 40 comprennent de préférence:

### Modules de prétraitement des données multimodales

Les modules 429, 430, 431 sont responsables du prétraitement des différentes modalités d'entrée fournies par la plateforme 450. Les données fournies par la plateforme peuvent comprendre :
- **Texte 423** : Entrée sous forme de texte écrit ou de caractères, par exemple, dans un champ d'entrée de prompt ou dans un formulaire texte d'un chatbot, de document téléchargé, ou de réponse à un questionnaire. Le texte peut inclure des réponses à un test de personnalité rempli par l'utilisateur, ou à d'autres questions utiles pour déterminer sa personnalité. Le texte peut être prétraité par un module de prétraitement de texte 429, par exemple pour supprimer des portions de texte moins relevantes, supprimer les marques de formatage, ou pour le traduire.
- **Images/Vidéos 424 :** Entrée visuelle, par exemple image fixe ou animée de l'utilisateur 1 capturée par la caméra de son équipement mobile pendant le dialogue, ou avant le dialogue. Les données visuelles peuvent être pré-traitées par le module de prétraitement d'image 430, par exemple pour être recadrées, corriger l'illumination, corriger la balance des blancs, corriger le contraste, réduire le bruit et/ou pour extraire des caractéristiques (features) du visage ou du corps de l'utilisateur 1.
- **Parole 425** : Entrée audio, par exemple un flux vidéo provenant de l'utilisateur pendant le dialogue avec la plateforme 450. Les paroles de l'utilisateur peuvent être prétraitées par le module de prétraitement de parole 431 par exemple pour supprimer les portions non pertinentes, améliorer la qualité sonore, et/ou pour les convertir en texte par un module de reconnaissance vocale. Dans un mode de réalisation, le module de prétraitement de parole 431 peut aussi extraire de l'entrée audio des informations telles que les émotions, l'intonation, le volume, le rythme, les respirations etc. Certaines de ses informations peuvent aussi être extraites du flux vidéo par le MLLM.
Des méthodes de "self-supervised learning" peuvent être mises en oeuvre pour modéliser la parole de l'utilisateur. Ce modèle est alors basé sur un ensemble de caractéristiques sujet à l'apprentissage par attention par exemple. La fréquence fondamentale de la voix humaine permettant de déterminer à 98% le genre d'une personne, on pourrait complémenter l'approche self-supervised learning avec des détections spécifiques (pour le genre par exemple).
- **Autres modalités** : Par exemple, des gestes capturés par des capteurs ou des mouvements corporels analysés par des réseaux neuronaux spécialisés.

### Modules de tokenisation des données prétraitées

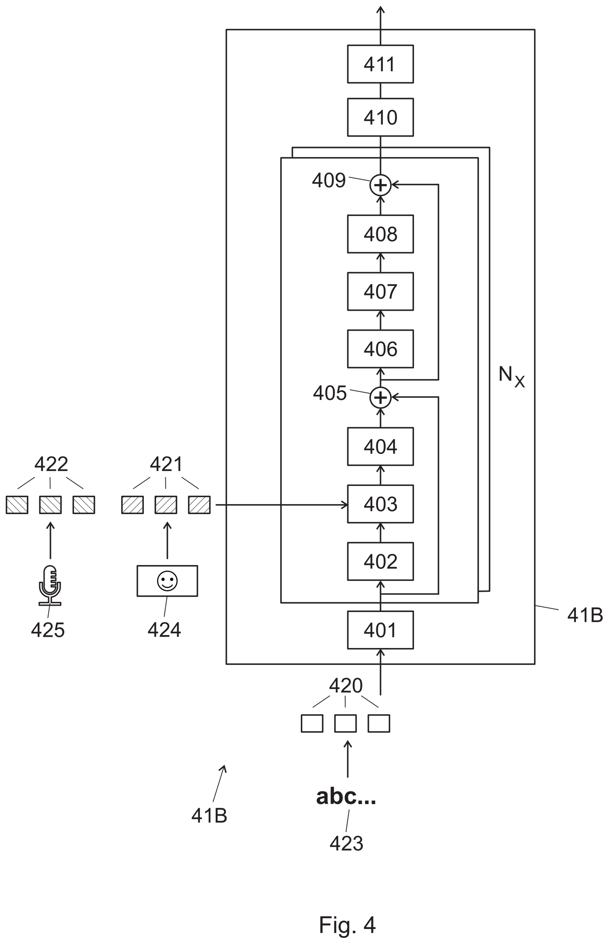

Les données prétraitées 426, 427, 428 fournies par les modules de prétraitement 429 à 431 sont ensuite converties en vecteurs 420, 421, 422 au moyen des modules de tokenization 432, 433, 434. Dans un mode de réalisation, les vecteurs représentant le texte, la parole, les images et les autres modes ont la même dimension et la même structure. Comme on le verra plus loin en relation notamment avec la figure 4, il est aussi possible de convertir ces données d'entrée en vecteurs de dimensions et/ou de structure différente, par exemple pour transmettre certains vecteurs à l'entrée du large modèle de langage et d'autres vecteurs à l'entrée d'un mécanisme de self attention (au niveau du décodeur) ou de cross attention (au niveau d'en encodeur et d'un décodeur).

Les différentes suites de vecteurs sont synchronisées à l'entrée du MLLM. Dans ce contexte, "synchroniser des modalités" veut dire aligner temporellement plusieurs types de signaux (modalités), par exemple texte, image, voix.

Dans ce but, les différentes suites de vecteurs correspondant à chaque modalité peuvent être découpées en fenêtres temporelles, par exemple des fenêtres de 0,5 à dix secondes, appariées entre elles. Par exemple, l'image de l'utilisateur entre les secondes 20 et 25 peut être appariée avec ses paroles pendant le même intervalle. L'appariement peut être effectué par exemple en labelisant les différentes fenêtres temporelles, afin que le MLLM puisse associer les paroles et la voix de l'utilisateur pendant une fenêtre à son image.

Les fenêtres temporelles peuvent avoir des durées différentes. Par exemples, les fenêtres temporelles associées à l'image et à la voix de l'utilisateur peuvent avoir une durée assez brève afin de capter des variations au long du dialogue, alors que les réponses de l'utilisateur à des questions peuvent être prédéfinies et utilisées pour l'ensemble du dialogue.

### Système d'apprentissage automatique

Dans le mode de réalisation illustré, le système d'apprentissage automatique comporte comme composant principal un Large Modèle de Langage Multimodal (MLLM) pour déterminer la personnalité de l'utilisateur et pour générer des répliques multimodales tenant compte de cette personnalité.

Dans un autre mode de réalisation non illustré, le système d'apprentissage automatique pourrait aussi inclure d'autres modules auto-apprenants, par exemple d'autres réseaux neuronaux, en plus du MLLM. Par exemple, le système d'apprentissage automatique pourrait comprendre un premier module auto-apprenant pour déterminer la personnalité de l'utilisateur selon les données en entrée, et un MLLM pour générer des répliques multimodales dépendant de cette personnalité. Des réseaux neuronaux permettant de déterminer la personnalité d'un utilisateur en fonction de sa voix, d'images de cet utilisateur ou de ses paroles sont connus dans l'état de la technique et peuvent être employés.

Le MLLM 41 reçoit les vecteurs 420, 421, 422 en entrée et génère des répliques appropriées en fonction du contexte multimodal.

Les répliques générées par le MLLM comprennent avantageusement des paroles, qui peuvent être lues par un synthétiseur vocal avec une voix, des intonations et/ou des émotions qui peuvent être déterminées par le MLLM 41 en tenant compte des échanges précédents et de la personnalité de l'utilisateur.

Les répliques générées par le MLLM peuvent aussi avantageusement inclure des images fixes ou animées, par exemple une ou plusieurs image fixe ou animée d'un avatar en train de dire les paroles générées par le MLLM. Le choix de l'avatar ainsi que ses mimiques, gestuelles et/ou expressions sont avantageusement choisies par le MLLM en tenant compte des échanges précédents et de la personnalité de l'utilisateur.

Le MLLM 41 est entraîné à partir de données multimodales, ce qui lui permet de comprendre et de produire des répliques cohérentes en tenant compte simultanément des différentes modalités d'entrée. Il est capable de traiter simultanément des informations textuelles, vocales et visuelles pour fournir des réponses pertinentes et contextuelles. Le MLLM peut déterminer la personnalité de l'utilisateur en fonctions des vecteurs en entrée, ou il peut recevoir en entrée des informations au sujet de cette personnalité déterminées par un autre module auto-apprenant.

Le MLLM 41 met de préférence en œuvre une architecture à Transformer multimodal, comme on le verra dans l'exemple de la figure 5.

Le rôle du MLLM 41 est d'interpréter les informations 420-422 en entrée et de générer des répliques appropriées, sous forme de vecteur représentant du texte 475, des images fixes ou animées 477, et de la parole 477. Les vecteurs d'image 476 peuvent être convertis en fichier ou en flux d'image 473 par un encodeur 470. Les vecteurs de parole peuvent être convertis en fichier audio par un encodeur audio 470, incluant par exemple un synthétiseur vocal. Les fichiers ou flux de texte, d'image et de parole 475-477 ainsi générés sont fournis à la plateforme 450 pour être transmis à l'utilisateur 1 dans le cadre du dialogue.

Le système d'apprentissage automatique multimodal utilise à la fois des données endogènes au système, et des données exogènes, c'est-à-dire des données qui ne sont pas extraites du dialogue avec l'utilisateur. Les données exogènes proviennent par exemple de bases de données ou de sites Internet.

Les données exogènes peuvent inclure la popularité des articles de l'assortiment, l'apprentissage devenant alors collaboratif puisque les achats d'un utilisateur influencent les recommandations de tous les autres utilisateurs.

Dans un mode de réalisation, le système d'apprentissage automatique utilise une approche de in-context learning (ICL), telle que décrite dans https://www.hopsworks.ai/dictionary/in-context-learning-icl tel que consulté le 1er février 2025. Dans un tel cas, au moins une partie des données exogènes sont stockées dans la fenêtre de contexte du MLLM.

Dans un mode de réalisation, notamment en cas de données exogènes de taille importante, le système d'apprentissage automatique utilise une approche de Génération augmentée par Récupération (Retrieval-Augmented Generation / RAG) pour accéder aux données exogènes et améliorer la qualité des répliques générées par le modèle, et la qualité des recommandations de produit, en permettant au modèle d'accéder à des informations exogènes au moment de la génération. Ainsi, plutôt que de se fier uniquement à ses connaissances endogènes (qui sont limitées par son entraînement et ses données antérieures), le modèle effectue une récupération d'informations à partir de données externes. Le modèle peut utiliser des techniques de recherche classiques, comme l'indexation et la recherche par mots-clés, ou des techniques plus avancées basées sur l'apprentissage profond pour effectuer une recherche contextuelle. Une fois les informations pertinentes récupérées, le modèle utilise ces informations comme contexte pour générer une réplique et pour classer l'utilisateur. Cela permet d'intégrer des informations actualisées, même après la phase d'entraînement du système d'apprentissage automatique.

Le MLLM peut par exemple aux informations exogènes suivantes pour générer les répliques souhaitées :
- Un historique de dialogue fourni par un gestionnaire de dialogue 460. Le gestionnaire de dialogue peut comprendre une mémoire pour stocker les échanges précédents entre le MLLM et l'utilisateur 1, au cours du dialogue en cours ou même de dialogues précédents. L'historique de dialogue peut être transmis au MLLM sous forme de vecteurs, par exemple des vecteurs introduits au niveau du mécanisme de modélisation de l'attention décrit plus bas.
- Des caractéristiques (identification, nom, prix, images etc) de produits provenant d'une base de données de produits 461. Cette base de données de produits inclut les produits mis en vente ou en comparaison par la plateforme 450. Les caractéristiques de produits peuvent être introduites dans le MLLM sous forme de vecteurs, par exemple des vecteurs introduits au niveau du mécanisme de modélisation de l'attention décrit plus bas.
- Des caractéristiques (identification, profil démographique tel que âge, genre, habitudes, pouvoir d'achat etc) de l'utilisateur 1 préalablement identifié. Ce profil peut être stocké dans une base de données de profils d'utilisateurs 462 incluant des caractéristiques des utilisateurs de la plateforme 450. Cette base de données de profils d'utilisateurs est avantageusement enrichie à chaque visite ou interaction entre l'utilisateur 1 et la plateforme 450. Elle peut inclure des informations déterminées à partir des échanges précédents, par exemple des informations relatives à la personnalité de l'utilisateur, à son historique d'achat, ou à ses préférences. Les caractéristiques d'utilisateurs 1 peuvent être introduites dans le MLLM sous forme de vecteurs, par exemple des vecteurs introduits en entrée ou au niveau du mécanisme de modélisation de l'attention décrit plus bas.
- D'autres informations exogènes, c'est-à-dire d'autres informations qui ne sont pas stockées dans le MLLM mais déterminée à partir de bases de données 463 dans le système informatique 40 ou sur Internet, par exemple des bases de données 5. Les informations exogènes peuvent inclure tout type d'information susceptible d'influencer la décision d'achat de l'utilisateur, y compris par exemple des informations relatives à la météo, à l'actualité, au vendeur, à des campagnes de publicité etc.

Une architecture Multi-Agent peut être mise en œuvre pour obtenir les données exogènes. Par exemple, un premier agent peut être mis en œuvre pour générer les répliques du dialogue, et un deuxième agent basé sur un système auto-apprenant peut être mis en œuvre pour interroger différentes bases de données ou sites Internet et accéder aux données exogènes utiles au dialogue.

Le procédé peut mettre en œuvre une génération augmentée par récupération pour accéder à ces données exogènes, ou une approche In-Context Learning (ICL).

Le MLLM 41 est entraîné préalablement. L'entraînement du MLLM est avantageusement effectué en deux phases : le pré-entraînement ("pre-training") et le post-entraînement ("post-training" ).

Durant la phase de pré-entraînement, le MLLM apprend à partir de grandes quantités de données multimodales (par exemple, des livres, des articles, des sites Web, des images, des vidéos, etc.) sans supervision directe. L'objectif du pré-entraînement est de permettre au modèle d'apprendre les bases du langage : la syntaxe, la grammaire, les relations entre les mots, et dans le cas d'images des formes, des textures, des objets, etc. Cela lui permet par exemple de prédire le mot suivant dans une phrase donnée (apprentissage de type "autoregressive") ou de prédire une forme. Cette phase de pré-entraînement peut être générique et n'est pas nécessairement adapté au type de données que reçoit ou doit générer le modèle de l'invention.

Le post-entraînement intervient après le pré-entraînement et est spécifique au procédé de l'invention. Il s'agit de raffiner et d'adapter le MLLM afin d'améliorer les performances du modèle sur le problème posé, c'est-à-dire pour générer en sortie des recommandations de produits et des répliques adaptées au processus d'achat.

Le post-entraînement peut inclure une étape de labellisation des répliques générées. On parle d'entraînement supervisé. La labellisation peut être effectuée de manière manuelle et/ou à l'aide d'une intelligence artificielle.

Le post-entraînement peut être effectué avec des enregistrements audio et/ou vidéo de dialogues entre des vrais consommateurs et des vrais vendeurs. Ces dialogues peuvent être labellisés manuellement ou de manière automatique pour déterminer les dialogues efficaces et les dialogues de moins bonne qualité.

Le post-entraînement peut être effectué par exemple avec des connaissances a priori de plusieurs vendeurs humains qui connaissent l'assortiment et la personnalité des acheteurs associés.

Le post-entraînement peut être effectué avec différents utilisateurs synthétisés en s'inspirant d'utilisateurs réels, et en leur associant avec une intelligence artificielle un assortiment, afin d'augmenter le volume des données d'entraînement.

Le post-entraînement peut être effectué avec des enregistrements audio et/ou vidéo de dialogues générés par un MLLM, et labellisés manuellement ou de manière automatique.

Dans un mode de réalisation, le post-entraînement utilise des techniques de reinforcement learning afin d'optimiser une fonction de récompense (reward). La fonction de récompense peut tenir compte du taux de conversion. Autrement dit, le post-entraînement optimise le MLLM de manière à maximiser le taux de conversion à la suite de l'échange avec l'utilisateur. Le taux de conversion correspond à ou dépend d'au moins l'un des paramètres suivants :
- Le pourcentage d'utilisateur qui achètent un produit de l'assortiment revendiqué.
- Le chiffre d'affaire réalisé suite au dialogue.
- La marge réalisée sur le ou les produits vendus suite au dialogue.
- Le pourcentage d'utilisateurs qui s'abonnent au système ou qui y retournent.
- Un indice de satisfaction des utilisateurs.

Un vendeur peut choisir le taux de conversion le plus relevant pour lui. Ainsi, le MLLM est de préférence entraîné avec une méthode de récompense de manière à mesurer le taux de conversion et à adapter son dialogue afin d'augmenter le taux de conversion de chaque vendeur.

Le post-entraînement inclut des techniques d'alignement pour adapter les répliques de manière à améliorer le taux de conversion et/ou à améliorer la modélisation de la correspondance entre les émotions et les assortiments de produit recommandés. Le procédé de l'invention met en œuvre un alignement basé sur un ou plusieurs algorithmes de renforcement, par exemple :
- Reinforcement learning with human feedback (RLHF), comme décrit par exemple dans https://arxiv.org/abs/2203.0215. Dans ce cas, après un entraînement initial, le modèle est amélioré grâce à des feedbacks humains ou provenant d'une autre intelligence artificielle sur les sorties du modèle. Le feedback humain peut inclure des feedbacks sur les répliques générées par le système, et/ou des réactions des utilisateurs, par exemple des conversions telles que des décisions d'achat de produits recommandés ou des retours sur ces recommandations. Le modèle est par exemple aligné pour maximiser le taux de conversion des utilisateurs.
- Direct Preference Optimization (DPO) https://arxiv.org/abs/2305.18290
- ORPO: Monolithic Preference Optimization without Reference Model, https://arxiv.org/abs/2403.07691
- GRPO, par exemple le GRPO de DeepSeek-R1-zero (https://arxiv.org/abs/2501.12948), tels que consultés le 1^{er} février 2025
- Thinking LLMs: General Instruction Following with Thought Generation https://arxiv.org/abs/2410.10630

Le système d'apprentissage automatique multimodal est entraîné de manière à déterminer la personnalité de l'utilisateur 1 dans une première étape, puis à recommander un assortiment de produit dépendant de cette personnalité et permettant de maximiser le taux de conversion dans une deuxième étape. Comme indiqué, la détermination de la personnalité peut être effectuée à l'intérieur d'un MLLM spécifiquement entraîné à cet effet, ou à l'aide d'un module apprenant distinct du MLLM et qui fournit au MLLM des informations sur la personnalité de l'utilisateur.

Le système d'apprentissage automatique multimodal est entraîné pour classer l'utilisateur selon des classes de personnalité non prédéterminées. Ainsi, le système d'apprentissage automatique peut lui-même établir des classes de personnalité pour répartir les utilisateurs. Ces classes de personnalité peuvent correspondre à des traits de personnalité connus (par exemple des traits de personnalité selon les big five), ou à d'autres traits de personnalité qui sont moins usuels ou qui n'ont pas nécessairement été identifiés ou décrits en psychologie.

Cette classification de personnalité peut dépendre des données en entrée 420 à 422, de l'historique du dialogue, du profil d'utilisateur et d'autres informations fournies à l'entrée du système d'apprentissage automatique multimodal.

Initialement, le système peut être entraîné par une labélisation manuelle des utilisateurs, par exemple en les classant manuellement dans des classes de personnalité prédéfinies par exemple selon les grands traits de personnalité (les « big five »). Le système d'apprentissage automatique apprend alors à associer ces entrées multimodales avec ces classes prédéfinies. Il est cependant agencé de manière à pouvoir ensuite classer les utilisateurs dans d'autres classes de personnalité qu'il peut déterminer lui-même.

Le classement des utilisateurs selon leur personnalité est de préférence effectué tout au long du dialogue, et s'affine au fur et à mesure du dialogue. La recommandation de produit au début et à la fin du dialogue n'est alors pas la même si l'utilisateur est reclassé.

La personnalité de l'utilisateur déterminée par le système d'apprentissage automatique multimodal peut être explicite, c'est-à-dire restituée à l'extérieur du système d'apprentissage automatique multimodal et éventuellement affichée ou enregistrée. Elle peut aussi être implicite, c'est-à-dire disponible uniquement à l'intérieur du système d'apprentissage automatique multimodal, par exemple dans une couche intermédiaire d'un réseau neuronal multicouches. Elle est avantageusement mémorisée de manière à ce que la personnalité d'un utilisateur identifié puisse être employée dès les premiers échanges d'un dialogue ultérieur, afin d'adapter le dialogue en fonction de cette personnalité, ainsi que les recommandations de produit.

Les classes de personnalité peuvent être représentées par un vecteur d'état. Le classement des utilisateurs, effectué sur la base de l'ensemble des entrées multimodales, revient donc à attribuer à chaque utilisateur au moins une classe de personnalité, et à adapter la recommandation à cette classe.

Le système d'apprentissage automatique multimodal est entraîné pour utiliser la personnalité de l'utilisateur d'une part afin de proposer à cet utilisateur des produits qui dépendent de cette personnalité. A cet effet, le système d'apprentissage automatique est entraîné afin de déterminer une correspondance entre différents types de personnalité et différents assortiments de produits.

Le système d'apprentissage automatique multimodal est entraîné pour utiliser la personnalité de l'utilisateur d'autre part afin d'adapter les répliques multimodales, du dialogue à cette personnalité. L'adaptation des répliques peut concerner les paroles, la voix, le ton de langage, les traits du visage affiché, les mouvements, les expressions etc.

Le système d'apprentissage automatique multimodal est avantageusement entraîné pour générer des répliques qui permettent de mettre en évidence la personnalité de l'utilisateur. Par exemple, le système peut être entraîné afin de générer des répliques permettant de déterminer si l'utilisateur est plutôt de type introverti ou extraverti lorsque ce trait de personnalité est important pour la recommandation de produit. Le système peut être entraîné pour générer des répliques qui permettent de déterminer la personnalité de l'utilisateur selon des traits de personnalité non prédéterminés.

Le système d'apprentissage automatique est de préférence entraîné de manière à déterminer la personnalité de l'utilisateur selon sa voix, indépendamment du contenu sémantique des réponses de l'utilisateur. Par conséquent, l'assortiment de produits recommandé dépend (indirectement) de la voix de l'utilisateur.

Le système d'apprentissage automatique est de préférence entraîné de manière à déterminer la personnalité de l'utilisateur selon la voix et l'intonation de l'utilisateur.

Le système d'apprentissage automatique est de préférence entraîné de manière à déterminer la personnalité de l'utilisateur selon ses émotions déterminée à partir de sa voix, indépendamment du contenu sémantique des réponses de l'utilisateur. Par conséquent, l'assortiment de produits recommandé dépend (indirectement) des émotions manifestées par l'utilisateur.

Le système d'apprentissage automatique est de préférence entraîné de manière à déterminer la personnalité de l'utilisateur selon les images statiques ou animées de l'utilisateur en entrée. Des systèmes d'intelligence artificielle qui classent les utilisateurs selon leur personnalité déterminée à partir d'images du visage ou de l'expression corporelle de l'utilisateur au cours d'un dialogue sont connus. Selon l'invention, ce classement se fait cependant dans des classes non prédéterminées.

Le système d'apprentissage automatique multimodal est de préférence entraîné de manière à déterminer la personnalité de l'utilisateur selon des images statiques ou animées de l'environnement de l'utilisateur en entrée. Il est par exemple possible de déterminer certains traits de la personnalité de l'utilisateur, y compris des goûts, sa propension à la dépense, etc, à partir d'éléments de son environnement.

Le système d'apprentissage automatique multimodal est de préférence entraîné de manière à déterminer la personnalité de l'utilisateur à partir de données exogènes, par exemple à partir de son profil dans la base de données 462, de son historique d'achat, de l'historique du dialogue etc. Le système d'apprentissage automatique multimodal peut par exemple tenir compte de l'âge, du genre, de l'ethnie, et/ou à de la situation familiale de l'utilisateur afin de déterminer sa personnalité.

Le MLLM peut aussi tenir compte d'informations relatives à la catégorie de produits recherchés par l'utilisateur. Ces informations peuvent être extraites des vecteurs 420-422 en entrée, et/ou être fournis par la plateforme 450. Le MLLM peut par exemple recevoir en entrée des vecteurs correspondant à des informations relatives à la catégorie de produits recherchés par l'utilisateur. Par exemple, les informations peuvent dépendre de la page web consultée par l'utilisateur, ou de filtres ou sélections effectués sur cette page web ou dans une application.

Le système d'apprentissage automatique multimodal (par exemple le MLLM, ou un module additionnel) peut être entraîné pour détecter des incohérences perceptives pré-attentives dans une interaction multimodale, et adapter le dialogue en fonction de ces incohérences. Par exemple, le système d'apprentissage automatique multimodal peut être entraîné afin de détecter des variations faciales ou oculaires, des latences de réponse, des micro-ruptures attentionnelles, et/ou des variations prosodiques de la voix. La détection de ces incohérences implique typiquement un traitement de plusieurs suites de vecteurs correspondant à différentes modalités, et implique par conséquent une synchronisation précise entre ces suites de vecteur. Par exemple, une incohérence peut impliquer la détection d'un mouvement du visage ou des yeux qui ne correspond pas à la parole dite ou entendue par l'utilisateur, et qui peut révéler un inconfort.

Le système détecte ainsi une divergence entre une prédiction interne de réponse perceptive de l'utilisateur et une réponse observée, cette divergence déclenchant une adaptation automatique du dialogue.

En détectant ces anomalies dans un dialogue, on crée avantageusement une boucle de rétroaction perceptive afin d'améliorer la qualité de l'interface homme-machine. Par exemple, le système d'apprentissage peut détecter ces incohérences perceptives en réponse à des suggestions de produit, et ajuster dynamiquement la génération du dialogue. L'ajustement du dialogue effectué en réponse à de telles détections peut impliquer le rythme du dialogue, la modalité dominante (voix, visuel ou texte), la complexité du discours, la voix synthétique utilisée, l'attribution de l'utilisateur à une classe de personnalité et/ou la recommandation d'assortiment.

Le système d'apprentissage automatique peut en outre recevoir en entrée des vecteurs correspondant à des informations relatives à l'environnement de l'utilisateur. Par exemple, il peut recevoir en entrée des vecteurs correspondant à des informations relatives à l'actualité, à la météo, à la date, et/ou à des campagnes publicitaires actuelles, lorsque ces informations exogènes ont un impact sur l'assortiment de produit à recommander et/ou sur les répliques générées pour recommander cet assortiment. Ces informations peuvent par exemple être obtenues depuis un serveur externe.

Le système d'apprentissage automatique peut en outre recevoir en entrée des vecteurs correspondant au profil de l'utilisateur, par exemple à son historique sur la plateforme, et/ou à l'âge, au genre, à l'ethnie, et/ou à la situation familiale de l'utilisateur. Ces informations peuvent être stockées dans une base de données d'utilisateur de la plateforme.

Le système d'apprentissage automatique peut en outre être entraîné pour tenter de déterminer le prix maximal acceptable par l'utilisateur, sans lui poser directement la question. Le prix acceptable peut être déterminé en fonction desdites entrées du système d'apprentissage automatique. Le prix maximal acceptable peut être déterminé en fonction de la personnalité de l'utilisateur telle que déterminé par le système.

Après avoir déterminé la personnalité de l'utilisateur, le système d'apprentissage automatique multimodal 41 détermine un assortiment de produits correspondant à cette personnalité. L'assortiment comprend au moins un produit. L'assortiment tient compte de la correspondance entre la personnalité de différents utilisateurs et les produits achetés ou appréciés par ces utilisateurs.

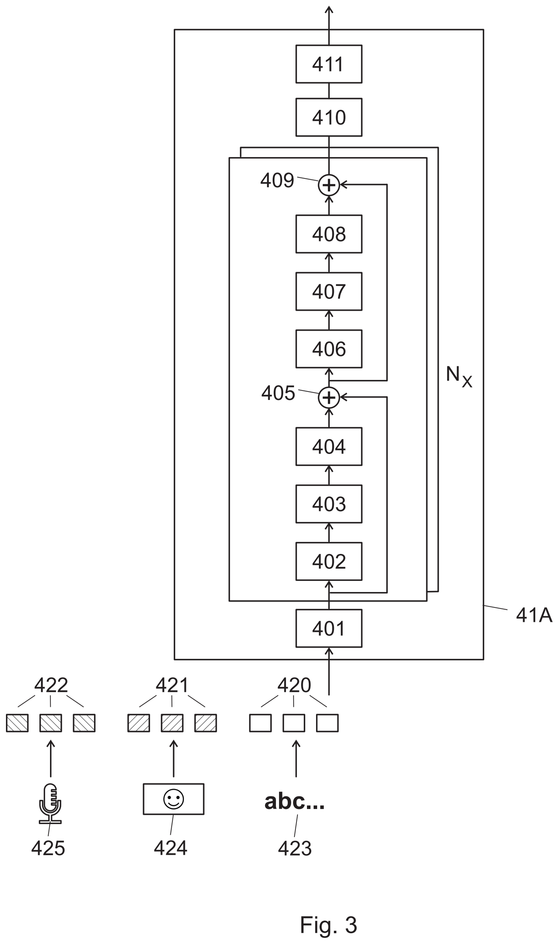

La figure 3 illustre un premier exemple de mode de réalisation 41A de MLLM selon l'invention. Le MLLM 41A est basés sur une architecture à Transformer. Il reçoit en entrée des vecteurs 420 correspondant à du texte 423 ; des vecteurs 421 correspondant à des images fixes ou animées 424 ; et des vecteurs 422 correspondant à des signaux audio 425. Les vecteurs sont générés à partir des signaux fournis par la plateforme 450 à l'aide de couches de tokenization (tokenizer) et d'intégration (embedding layer).

Les vecteurs 420, 421, 422 sont transmis à une couche de régularisation par abandon (dropout layer) 401 afin de généraliser les vecteurs et typiquement d'améliorer la robustesse du réseau neuronal en forçant arbitrairement certains vecteurs à zéro.

La sortie de la couche 401 est transmise à une couche de normalisation 402 qui permet d'améliorer la stabilité et la vitesse de l'entraînement, notamment en améliorant la convergence.

La sortie de la couche de normalisation 402 est transmise à une couche d'attention multi-têtes masquée 403 (masked multi-head attention layer). Cette couche permet de masquer les futurs tokens, et de tenir compte du contexte général et de tokens pertinents lors de la génération de chaque nouveau token, même si ces tokens sont éloignés. Plusieurs mécanismes d'attention sont exécutés en parallèle.

La sortie de la couche 403 est transmise à une autre couche de régularisation par abandon 404. Les données en sortie de la couche 404 sont additionnées ou combinées dans le module 405 avec les données en sortie de la couche 405.

La sortie du module 405 est transmise à une deuxième couche de normalisation 406. La sortie de la couche de normalisation 406 est transmise à la couche entièrement connectée 407 (feed-forward layer) qui transforme les données en entrée en une représentation différente.

La sortie de la couche 407 est transmise à une autre couche de régularisation par abandon 408, dont la sortie est combinée ou additionnée par le module 409 avec la sortie du module 405. Les données en sortie du module 405 sont normalisées par la couche de normalisation 410, puis linéarisées par la couche de linéarisation 411.

Les couches 402 à 409 peuvent être répétées N fois.

Dans ce mode de réalisation, les différentes modalités 420-422 sont donc toutes introduites à l'entrée du MLLM. Dans le mode de réalisation de la figure 4, certaines modalités 421-422 sont introduites au niveau de la couche d'attention multi-têtes masquée 403. Par exemple, les vecteurs représentant un texte sont introduits en entrée du MLLM tandis que les vecteurs correspondant aux modalités image et audio sont introduits au niveau de la couche d'attention multi-têtes masquée 403. D'autres répartitions peuvent être imaginées. Par ailleurs, des vecteurs correspondant à des données exogènes peuvent être introduits soit en entrée, soit au niveau de la couche d'attention multi-tête, soit aux deux endroits.

Le procédé mis en œuvre selon l'invention va être illustré à l'aide d'un dialogue entre un utilisateur 1 (Jean) et la plateforme 450 du système informatique 4. Jean souhaite acheter du vin pour ses invités sur la plateforme 450 du serveur 4. Il utilise pour cela son smartphone 2 et un site web ou de préférence une application.

Lors de l'interaction avec le système 4, l'utilisateur 1 tient son smartphone 2 devant lui pour à la fois parler et voir les informations affichées sur l'écran. L'application ou le navigateur affiche un avatar (André) qui peut être personnalisé en fonction de la personnalité perçue de Jean.

En tenant compte de la personnalité de Jean, l'application et/ou la plateforme sur le serveur 4 génère des répliques dans un dialogue avec l'utilisateur Jean. Le dialogue peut comprendre les échanges suivants :

| **Le consommateur : Jean** | **L'avatar : André** | **Le système d'apprentissage automatique multimodal basé sur un (MLLM)** |
|---|---|---|
| | L'avatar André selon la personnalité perçu de Jean. | Le système détecte visuellement la personnalité de Jean, comme quelqu'un qui apprécie la tradition et l'authenticité. Il génère la première présentation visuelle du dialogue. |
| Bonjour André | | Le système affine la classification de la personnalité en tenant compte de la voix et de l'état émotionnel de Jean pendant tout l'échange |
| | Comment puis-je vous aider ? | |
| J'ai des invités demain soir, que me proposez-vous comme spécialité ? | | Ici, le système affiche un assortiment de spécialités que Jean peut consulter visuellement. C'est une sélection adaptée à la personnalité perçue de Jean sur la base des échanges multimodaux et de son profil. |
| | | Voyant que Jean attarde son attention sur la Malvoisie, le système lui propose ce choix vocalement, sans mentionner le prix et l'état du stock qui sont déjà affichés par le smartphone. |
| | Je vous propose ma Malvoisie flétrie. | |
| C'est parfait, vous m'envoyer deux bouteilles ! | | Le système effectue la transaction dans la gestion du stock. Le taux de conversion des ventes est augmenté en fonction, et utilisé pour l'entraînement du MLLM et notamment pour l'entrainement du modèle de correspondance entre la personnalité et l'assortiment de produit. Un autre utilisateur avec une personnalité similaire aura donc plus de chance de se voir recommander le même assortiment de produit. |
| | | Par l'usage d'un MLLM-based Agent, le système connait l'adresse de Jean et prend l'initiative de la suite du dialogue en connaissant l'adresse de Jean et la proximité géographique. |
| | | Cette séquence de dialogue est également utilisée pour améliorer la modélisation de l'a correspondance utilisateurs et produits. |
| | N'hésitez pas de passer un de ces jours à la cave, j'ai un petit quelque chose qui ne manquera pas de vous plaire ! | |
| Ça marche, à tout bientôt ! | | Ici, aussi une nouvelle séquence du dialogue est collectée en vue d'un renforcement du modèle. |
| | Au plaisir de vous voir ! | |

### Fonctionnalités supplémentaires et terminologie

Selon les modes de réalisation, certaines étapes, événements ou fonctions des algorithmes décrits dans ce document peuvent être exécutés dans un ordre différent, être ajoutés, fusionnés ou complètement omis (par exemple, toutes les étapes ou événements décrits ne sont pas nécessaires à la mise en œuvre des méthodes). En outre, dans certains modes de réalisation, des étapes ou événements peuvent être effectués simultanément, par exemple grâce à un traitement multi-thread, un traitement par interruption, ou en utilisant plusieurs processeurs, cœurs de processeur ou autres architectures parallèles, plutôt que séquentiellement. Par ailleurs, différentes tâches ou processus peuvent être réalisés par différentes machines ou systèmes informatiques fonctionnant de manière coordonnée.

Les différents blocs logiques illustratifs, modules, modèles, Transformers et étapes d'algorithmes décrits dans ce document peuvent être implémentés sous forme de matériel électronique, de logiciel informatique, ou d'une combinaison des deux. Afin d'illustrer clairement cette interchangeabilité entre matériel et logiciel, divers composants, blocs, modules, plateformes informatiques, machines et étapes illustratifs ont été décrits ci-dessus en termes généraux de leur fonctionnalité. Que cette fonctionnalité soit implémentée sous forme de matériel ou de logiciel dépend de l'application particulière et des contraintes de conception imposées au système global. La fonctionnalité décrite peut être implémentée de différentes manières selon chaque application spécifique, mais ces décisions d'implémentation ne doivent pas être interprétées comme un écart par rapport au champ d'application de la divulgation.

Le procédé de l'invention peut être mis en œuvre dans un équipement, par exemple un équipement d'utilisateur tel que smartphone, tablette, ou ordinateur, ou dans un système incluant un tel équipement et un serveur. Le serveur peut être un serveur physique ou virtuel, un serveur basé sur le cloud, un ensemble de serveurs interconnecté, un système hybride comprenant une puissance de traitement dans un serveur ainsi qu'une puissance de traitement supplémentaire dans le cloud, ou un moteur de calcul intégré dans un appareil, pour n'en nommer que quelques-uns.

Les systèmes informatiques de l'invention peuvent être basés sur un microprocesseur, un ordinateur central, un processeur de signal numérique, une unité de traitement neuronal dédiée, un appareil informatique portable. Etc.

Les étapes d'une méthode, d'un processus ou d'un algorithme décrits en lien avec les modes de réalisation divulgués dans ce document peuvent être directement intégrées dans un matériel, dans un module logiciel stocké dans un ou plusieurs dispositifs de mémoire et exécuté par un ou plusieurs processeurs, ou dans une combinaison des deux. Un module logiciel peut résider dans une mémoire RAM, une mémoire flash, une mémoire ROM, une mémoire EPROM, une mémoire EEPROM, un FPGA, des registres, un disque dur, un disque amovible, un CD-ROM ou tout autre support physique ou support de stockage informatique non transitoire. Un exemple de support de stockage peut être couplé au processeur de manière à ce que le processeur puisse lire des informations à partir du support de stockage et y écrire des informations. En alternative, le support de stockage peut être intégré au processeur. Le support de stockage peut être volatil ou non volatil.

Le langage conditionnel utilisé dans ce document, tel que, entre autres, "peut", "pourrait", "peut-être", "par exemple" et similaires, sauf indication contraire spécifique ou dans le contexte de l'utilisation, est généralement destiné à indiquer que certains modes de réalisation incluent, tandis que d'autres n'incluent pas, certaines caractéristiques, unités ou états. Ainsi, ce langage conditionnel n'est généralement pas destiné à impliquer que des caractéristiques, unités ou états sont requis pour un ou plusieurs modes de réalisation ou que ces derniers incluent nécessairement une logique permettant de décider, avec ou sans intervention ou incitation de l'utilisateur, si ces caractéristiques, unités ou états sont inclus ou doivent être exécutés dans un mode de réalisation particulier. Les termes "comprenant", "incluant", "ayant" et similaires sont synonymes, utilisés de manière inclusive et ouverte, et n'excluent pas des unités, caractéristiques, actes, opérations supplémentaires, et ainsi de suite. De plus, le terme "ou" est utilisé dans son sens inclusif (et non exclusif) de sorte que, lorsqu'il est utilisé, par exemple, pour connecter une liste d'unités, le terme "ou" signifie une, plusieurs ou toutes les unités de la liste. En outre, le terme "chaque", tel qu'il est utilisé ici, en plus de son sens ordinaire, peut désigner tout sous-ensemble d'un ensemble d'unités auquel il s'applique.

Les modes de réalisation divulgués peuvent inclure un support comprenant des instructions logicielles qui, lorsqu'elles sont exécutées par un ou plusieurs dispositifs de traitement, amènent le ou les dispositifs de traitement à exécuter le procédé décrit.

## Revendications

1. Procédé mis en œuvre par un système informatique (4) pour générer un dialogue comprenant une recommandation d'un assortiment de produits adaptée à un utilisateur (1) à l'aide d'un système d'apprentissage automatique multimodal basé sur un large modèle de langage multimodal (MLLM) (41),
le procédé comprenant les étapes de :
i-disposer de vecteurs correspondant à un assortiment de produits ;
ii-recevoir les données suivantes dans une plateforme logicielle de dialogue interactive (450) :
a) des images de l'utilisateur (424),
b) des extraits de sa voix (425), et
c) des réponses de l'utilisateur à des questions (423),
iii-effectuer un pré-traitement desdites données en entrée ;
iv-générer à l'aide d'un ou plusieurs processeurs des vecteurs (420, 421,422) correspondant auxdites données en entrée prétraitées;
v-transmettre lesdits vecteurs audit système d'apprentissage automatique multimodal (41);
vi-fournir en sortie du système d'apprentissage automatique multimodal (41) des vecteurs correspondant à des répliques vocales, textuelles et/ou multimodales ;
vii-convertir lesdits vecteurs (420, 421, 422) en sortie en répliques textuelles, vocales et/ou multimodales,
dans lequel lesdites répliques contiennent un assortiment de produits recommandés dépendant desdites entrées et de l'entraînement du système d'apprentissage automatique multimodal.

2. Procédé selon la revendication 1, dans lequel le large modèle de langage multimodal est entraîné à l'aide d'un algorithme de renforcement.

3. Procédé selon la revendication 1 ou 2, ledit système d'apprentissage automatique (41) comprenant une couche de modélisation de l'attention (43), les vecteurs correspondant aux images de l'utilisateur et/ou aux extraits de sa voix étant utilisés pour influencer cette couche de modélisation de l'attention.

4. Procédé selon l'une des revendications 1 à 3, le système d'apprentissage automatique multimodal (41) étant entraîné pour classer l'utilisateur (1) selon des classes de personnalité non prédéterminées, et pour générer ladite réplique de dialogue selon lesdites classes.

5. Procédé selon la revendication 4, lesdites classes de personnalité étant représentées par des vecteur d'état.

6. Procédé selon l'une des revendications 4 à 5, dans lequel le système d'apprentissage automatique multimodal (41) est entraîné pour déterminer l'intonation de la réplique selon les éléments a) à c) en entrée et/ou selon lesdites classes de personnalité..

7. Procédé selon l'une des revendications 1 à 6, le système d'apprentissage automatique multimodal (41) étant entraîné de manière à ce que l'assortiment de produits recommandé dépende de la voix de l'utilisateur.

8. Procédé selon l'une des revendications 1 à 7, dans lequel le système d'apprentissage automatique multimodal (41) reçoit en outre en entrée :
d) des vecteurs correspondant à des informations relatives à l'environnement de l'utilisateur.

9. Procédé selon l'une des revendications 1 à 8, dans lequel le système d'apprentissage automatique multimodal (41) reçoit en outre en entrée :
e) des vecteurs correspondant à des informations relatives à l'actualité, à la météo, à la date, à la popularité de produits de l'assortiment, et/ou à des campagnes publicitaires actuelles.

10. Procédé selon l'une des revendications 1 à 9, dans lequel le système d'apprentissage automatique multimodal (41) reçoit en outre en entrée :
f) un profil de l'utilisateur, incluant par exemple son historique sur la plateforme, et/ou son âge, son genre, son 'ethnie, et/ou la situation familiale de l'utilisateur.

11. Procédé selon l'une des revendications 1 à 10, dans lequel le système d'apprentissage automatique multimodal (41) reçoit en outre en entrée :
f) des vecteurs correspondant à des informations relatives à la catégorie de produits recherchés par l'utilisateur.

12. Procédé selon l'une des revendications 4 à 11, comprenant une étape de génération d'un avatar animé présentant ladite réplique, les mimiques et la gestuelle dudit avatar dépendant de la personnalité de l'utilisateur.

13. Procédé selon la revendication 12, dans lequel une architecture Multi-Agent est mise en œuvre pour intégrer les données exogènes.

14. Procédé selon l'une des revendications 15 ou 16, mettant en œuvre une Génération augmentée par Récupération et/ou l'apprentissage en contexte (ICL) du MLLM pour accéder à des données exogènes, c'est-à-dire des données qui ne sont pas extraites du dialogue avec l'utilisateur

15. Procédé selon l'une des revendications 1 à 14, comprenant une étape de détection d'incohérences perceptives pré-attentives dans une interaction multimodale, et une étape d'adaptation du dialogue en fonction de ces incohérences.

16. Procédé selon l'une des revendications 1 à 15, dans lequel lesdites données en entrées correspondant à chaque modalité sont transformée en une suite de vecteurs, les différentes suites de vecteurs correspondant à chaque modalité étant découpées en fenêtres temporelles, par exemple des fenêtres de 0,5 à dix secondes, appariées entre elles.Support comprenant des instructions logicielles qui, lorsqu'elles sont exécutées par un ou plusieurs dispositifs de traitement informatique, amènent le ou les dispositifs de traitement à exécuter le procédé de l'une des revendications précédentes.
